Europäisches Patentamt

European Patent Office

Office européen des brevets

(19)

(11) EP 1 729 062 A2

(12) **EUROPEAN PATENT APPLICATION**

(43) Date of publication:
06.12.2006 Bulletin 2006/49

(51) Int Cl.:
F23C 7/04 (2006.01)　　　F23C 6/04 (2006.01)
F23C 5/28 (2006.01)

(21) Application number: 06010946.9

(22) Date of filing: 26.05.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 02.06.2005 US 143534

(71) Applicant: Air Products and Chemicals, Inc.
Allentown, PA 18195-1501 (US)

(72) Inventors:
• Joshi, Mahendra Ladharam
Allentown, PA 18104 (US)
• Li, Xianming Jimmy
Orefield, PA 18069 (US)

(74) Representative: Schwabe - Sandmair - Marx
Stuntzstrasse 16
81677 München (DE)

(54) **Dynamic burner reconfiguration and combustion system for process heaters and boilers**

(57) A furnace combustion system includes a plurality of burners adapted to generate a plurality of flames and an oxidant port disposed between and surrounded by at least two of the burners. Each burner is spaced apart from another burner and adapted to combust a stream of a first fuel or an other fuel with a stream of a first oxidant or an other oxidant and to generate a flame. The oxidant port is adapted to transmit at least one jet of the first oxidant or the other oxidant axially between at least two of the flames. The at least one jet is transmitted from the oxidant port at a controlled flow rate. At least a portion of the first oxidant or the other oxidant in the jet is required to complete combustion of at least a portion of at least one stream of the first fuel or the other fuel.

FIG. 2

EP 1 729 062 A2

**Description**

BACKGROUND OF THE INVENTION

The present invention relates to combustion systems and methods for reducing nitrogen (NOx) and carbon monoxide (CO) emissions, and in particular to such systems and methods which produce global (overall) reductions in NOx, as opposed to localized NOx reductions (such as those produced by staging techniques).

Many process heaters and boilers have NOx emissions compliance problems for various reasons. For example, many vertical cylindrical process heaters produce more than 100 ppm NOx on average. Most of these heaters are of older design and operate at a very high firing intensity (> 500,000 Btu/Hr-ft2). Multiple burners in the heaters typically are clustered in a tight burner circle and individual flames merge in the center, which creates a high-temperature, fuel-rich region. The unified flames produce both thermal and prompt NOx due to the coalescing fuel-rich region in the center of the heater.

Whereas in cylindrical heaters the burners generally are installed in a circular geometry, in wall-fired boilers, multiple burners usually are installed as a matrix on a side wall of the furnace of the boiler. The spacing of the burners in both applications is reduced to the minimum for deriving the maximum heat flux per unit volume. However, the arrangement of tightly packed burners leads to merging of individual flames, an increase in peak flame temperatures, formation of fuel-rich regions, and an increase in NOx emissions.

Typical coal-fired burners in wall-fired boilers produce on average about 400 ppmv NOx or 200 mg/MJ NOx emissions. Most low-NOx burners today have incorporated some sort of air staging process, but the limitations of air staging are clear due to undesirable flame merging created by close proximity of burners installed on a firing wall and poor flame stability (at higher staging levels). Highly staged burners have a flame stability issue due to fuel-rich primary flame stoichiometry ($\phi > 1.3$).

There are many prior art applications involving low-NOx burners fitted with ports for individual staged air jets. However, these jets are dedicated to altering the combustion process for a particular burner. The goal of such air staging is to create a primary flame deficient of combustion air (oxidant), or producing a fuel-rich flame which has a lower adiabatic flame temperature and thus lower thermal NOx formation rates. The resulting fuel-rich mixture from the primary flame is then combusted downstream using the staged air jet(s). Thus, air staging is a two-step process involving 1) fuel-rich primary combustion, and 2) destruction of CO and HCs in a second step using staged air jet(s). The main drawbacks of such air staging processes are set forth below.

1) The first step, or primary fuel-rich combustion, leads to significant prompt NOx formation due to formation of CH type bonds, which leads to HCN and NO formation.

$$[NO] = k[N_2]\int[C_xH_y]d\theta$$

$$C_xH_y \longleftrightarrow CH + C_{x-1}H_{y-1}$$

2) The staged air jets are designed for secondary combustion of HCs and CO produced from a particular burner and not from neighboring burners.

$$CH + N_2 \rightarrow HCN + N$$

$$HCN + O_2 \rightarrow NO + ...$$

3) The staged air jets dedicated to individual burners do not alter the negative process effects (fuel-rich flame, higher peak temperatures, higher NOx emissions) produced by merging of multiple flames. The combined effect of merging or coalescing flames actually amplify the NOx emissions by creating hot spots due to lack of heat transfer and lack of oxidant availability in the central flame region.

4) The individual staged air jets dedicated to each burner are not designed in the flow rate, velocity, swirl, or other flow characteristics to match proper mixing and performance requirements of the merged or unified flame. The resulting process is not adequate to address the NOx reduction objectives. In fact, a unified flame could wipe out the individual NOx reduction benefits produced by each burner fitted with air staging jets.

In summary, the individual burner air staging processes of the prior art are "localized" low-NOx processes, whereas the present invention provides for a "global" low-NOx process and furnace combustion system.

It is desired to have a system and method to lower NOx and CO emissions from process heaters, boilers, and other such combustion equipment which use multiple burners.

It is further desired to have a system and a method to reduce the flame merging effect of multiple burners, the associated peak flame temperatures, and the resulting NOx emissions in such process heaters, boilers, and combustion equipment.

It is still further desired to have an improved process heater having lower NOx and CO emissions, higher overall heat transfer, higher heater turndown, and improved draft management for natural draft heaters.

It is still further desired to have an improved furnace in a boiler or process heater having reduced hot spots, improved heat transfer profile, increased fuel efficiency, and an extension of tube life due to lowered peak flame temperatures.

It also is desired to have a system and a method for combusting fuels in process heaters and boilers which afford better performance than the prior art, and which also overcome many of the difficulties and disadvantages of the prior art to provide better and more advantageous results.

BRIEF SUMMARY OF THE INVENTION

The present invention is a furnace combustion system and a method for combusting a fuel in a furnace. The invention also includes a method and a system for reducing nitrogen oxide emissions from a plurality of products of combustion generated during combustion of a fuel in a furnace.

A first embodiment of the furnace combustion system includes a plurality of burners adapted to generate a plurality of flames, including a first burner and a second burner, and an oxidant port disposed between and surrounded by at least two of the plurality of burners, including the first burner and the second burner. The first burner is adapted to combust a first stream of a fuel with a first stream of a first oxidant and to generate a first flame. The second burner is spaced apart from the first burner and adapted to combust a second stream of the fuel, or a stream of an other fuel, with a second stream of the first oxidant, or a first stream of a second oxidant, and to generate a second flame. The oxidant port is adapted to transmit at least one jet of the first oxidant, the second oxidant, or an other oxidant, axially between at least two of the plurality of flames, including the first flame, and the second flame. The at least one jet is transmitted from the oxidant port at a controlled flow rate. At least a portion of the first oxidant, or the second oxidant, or the other oxidant in the at least one jet is required to complete combustion of at least a portion of at least one of the first stream of the fuel and the second stream of the fuel, or the stream of the other fuel.

There are many variations of the first embodiment of the furnace combustion system. In one variation, the controlled flow rate is controlled at least in part by a damper. In another variation, the oxidant port is substantially equidistant from the first burner and the second burner. In yet another variation, the at least one jet includes a swirling stream. In a variant of this variation, the swirling stream has a swirl number in the range of about 0.2 to about 0.6.

In another variation, the at least one jet has an oxygen concentration in a range of about 5 vol. % to about 50 vol. %. In yet another variation, the at least one jet provides about 5% to about 50% of a total oxidant required to operate a furnace operated with the furnace combustion system. In still yet another variation, the at least one jet has a velocity in a range of about 20 ft/sec. to about 1,000 ft/sec.

In another variation, at least one of the first flame and the second flame is fuel-rich. In yet another variation, the first flame merges with the second flame. In still yet another variation, at least one of the first burner and the second burner is adapted to transmit a variable distribution of at least one of the fuel and the other fuel.

A second embodiment of the furnace combustion system includes a plurality of burners adapted to generate a plurality of flames and an oxidant port disposed between and surrounded by at least two of the plurality of burners. Each burner is spaced apart from another burner and adapted to combust a stream of a first fuel or an other fuel with a stream of a first oxidant or an other oxidant to generate a flame. The oxidant port is adapted to transmit at least one jet of the first oxidant or the other oxidant axially between at least two of the plurality of flames. The at least one jet is transmitted from the oxidant port at a controlled flow rate. At least a portion of the first oxidant or the other oxidant in the at least one jet is required to complete combustion of at least a portion of at least one stream of the first fuel or the other fuel.

A third embodiment of the furnace combustion system, the system being in a furnace having an interior and a longitudinal axis, includes a plurality of burners adapted to generate a plurality of flames and an oxidant port disposed in the interior of the furnace between and surrounded by the plurality of burners. Each burner is spaced apart from another burner and adapted to combust a stream of a first fuel or an other fuel with a stream of a first oxidant or an other oxidant and to generate a flame. The plurality of burners is disposed in the interior of the furnace in a substantially circular pattern spaced around the longitudinal axis of the furnace. The oxidant port is substantially equidistant from each burner and adapted to transmit at least one jet of the first oxidant or the other oxidant axially between at least two of the plurality of flames. The at least one jet is transmitted from the oxidant port at a controlled flow rate. At least a portion of the first oxidant or the other oxidant in the at least one jet is required to complete combustion of at least a portion of at least one stream of the first fuel or the other fuel.

A fourth embodiment of the furnace combustion system is similar to the third embodiment, but includes a plurality of fuel staging lances. Each fuel staging lance is spaced apart from another fuel staging lance, and the plurality of fuel staging lances surrounds at least one of the burners. At least one fuel staging lance is adapted to transmit a flow of at least one of the first fuel and the other fuel at a first flow rate different than a second flow rate at which another flow of at least one of the first fuel and the other fuel is transmitted by at least one other fuel staging lance.

A fifth embodiment of the furnace combustion system, the system being in a furnace having an inner wall, includes a plurality of burners adapted to generate a plurality of flames and a plurality of oxidant ports, each oxidant port disposed between and surrounded by at least two of the plurality of burners. Each burner is spaced apart from another burner and adapted to combust a stream of a first fuel or an other fuel with a stream of a first oxidant or an other oxidant and to generate a flame. Each oxidant port is adapted to transmit at least one jet of the first oxidant or the other oxidant axially between at least two of the plurality of flames. The plurality of the burners forms a first matrix and the plurality of the oxidant ports forms a second matrix adjacent the first matrix. The at least one jet is transmitted from the oxidant port at a controlled flow rate. At least a portion of the first oxidant or the other oxidant in the at least one jet is required to complete combustion of at least a portion of at least one stream of the first fuel or the other fuel. In a variation of this embodiment, the first matrix and the second matrix are each formed on or near the inner wall of the furnace.

A sixth embodiment of the furnace combustion system, the system being in a furnace having a top and a bottom opposite the top, includes a plurality of burners adapted to generate a plurality of flames and an oxidant port disposed between and surrounded by two of the plurality of burners. Each burner is spaced apart from another burner and adapted to combust a stream of a first fuel or an other fuel with a stream of a first oxidant or an other oxidant and to generate a flame. The oxidant port is adapted to transmit at least one jet of the first oxidant or the other oxidant axially between two of the plurality of flames. The oxidant port and the two of the plurality of burners are adjacent the top of the furnace, and the two of the plurality of flames are transmitted from the two of the plurality of burners toward the bottom of the furnace. The at least one jet is transmitted from the oxidant port at a controlled flow rate. At least a portion of the first oxidant or the other oxidant in the at least one jet is required to complete combustion of at least a portion of at least one stream of the first fuel or the other fuel.

Another aspect of the invention is a system for reducing nitrogen oxide emissions from a plurality of products of combustion generated during combustion of a fuel in a furnace. One embodiment of the system includes a plurality of burners adapted to generate a plurality of flames, including a first burner and a second burner, and an oxidant port disposed between and surrounded by at least two of the plurality of burners, including the first burner and the second burner. The first burner is adapted to combust a first stream of a fuel with a first stream of a first oxidant and to generate a first flame. The second burner is spaced apart from the first burner and adapted to combust a second stream of the fuel, or a stream of an other fuel, with a second stream of the first oxidant, or a first stream of a second oxidant, and to generate a second flame. The oxidant port is adapted to transmit at least one jet of the first oxidant, the second oxidant, or an other oxidant, axially between at least two of the plurality of flames, including the first flame and the second flame. The at least one jet has an oxygen concentration in the range of about 5 vol. % to about 50 vol. %. The at least one jet is transmitted from the oxidant port at a controlled flow rate controlled at least in part by a damper. At least a portion of the first oxidant, or the second oxidant, or the other oxidant in the at least one jet is required to complete combustion of at least a portion of at least one of the first stream of the fuel and the second stream of the fuel, or the stream of the other fuel. The at least one jet provides about 5% to about 50% of a total oxidant required to operate the furnace.

A first embodiment of the method for combusting a fuel in a furnace includes multiple steps. The first step is to provide a plurality of burners, including a first burner and a second burner, adapted to generate a plurality of flames. The first burner is adapted to combust a first stream of the fuel with a first stream of a first oxidant and to generate a first flame. The second burner is spaced apart from the first burner and adapted to combust a second stream of the fuel, or a stream of an other fuel, with a second stream of the first oxidant, or a first stream of a second oxidant, and to generate a second flame. The second step is to combust the first stream of the fuel with the first stream of the first oxidant. The third step is to combust the second stream of the fuel, or the stream of the other fuel, with the second stream of the first oxidant, or the first stream of the second oxidant. The fourth step is to generate the plurality of flames, including the first flame and the second flame. The fifth step is to provide an oxidant port disposed between and surrounded by at least two of the plurality of burners, including the first burner and the second burner. The oxidant port is adapted to transmit at least one jet of the first oxidant, the second oxidant, or an other oxidant, axially between at least two of the plurality of flames, including the first flame and the second flame. The sixth step is to transmit the at least one jet from the oxidant port at a controlled flow rate axially between at least two of the plurality of flames, including the first flame and the second flame. At least a portion of the first oxidant, or the second oxidant, or the other oxidant in the at least one jet completes combustion of at least a portion of at least one of the first stream of the fuel and the second stream of the fuel, or the stream of the other fuel.

There are many variations of the first embodiment of the method for combusting a fuel in a furnace. In one variation, the controlled flow rate is controlled at least in part by a damper. In another variation, the oxidant port is substantially equidistant from the first burner and the second burner. In yet another variation, the at least one jet includes a swirling stream. In a variant of this variation, the swirling stream has a swirl number in the range of about 0.2 to about 0.6.

In another variation, the at least one jet has an oxygen concentration in the range of about 5 vol. % to about 50 vol. %. In yet another variation, at least one jet provides about 5% to about 50% of a total oxidant required to operate the furnace. In still yet another variation, the at least one jet has a velocity in the range of about 20 ft/sec. to about 1,000 ft/sec.

In another variation, at least one of the first flame and the second flame is fuel-rich. In yet another variation, the first flame merges with the second flame. In still yet another variation, at least one of the first burner and the second burner is adapted to transmit a variable distribution of at least one of the fuel and the other fuel.

A second embodiment of the method for combusting a fuel in a furnace includes multiple steps. The first step is to provide a plurality of burners adapted to generate a plurality of flames, each burner being spaced apart from another burner and adapted to combust a stream of a first fuel or an other fuel with a stream of a first oxidant or an other oxidant and to generate a flame. The second step is to combust the stream of the first fuel or the other fuel with a stream of the first oxidant or the other oxidant. The third step is to generate the plurality of flames. The fourth step is to provide an oxidant port disposed between and surrounded by at least two of the plurality of burners. The oxidant port is adapted to transmit at least one jet of the first oxidant or the other oxidant axially between at least two of the plurality of flames. The fifth step is to transmit the at least one jet from the oxidant port at a controlled flow rate axially between at least two of the plurality of flames. At least a portion of the first oxidant or the other oxidant in the at least one jet completes combustion of at least a portion of the at least one stream of the first fuel or the other fuel.

A third embodiment of the method for combusting a fuel in a furnace, the furnace having an interior and a longitudinal axis, includes multiple steps. The first step is to provide a plurality of burners adapted to generate a plurality of flames. Each burner is spaced apart from another burner and adapted to combust a stream of a first fuel or an other fuel with a stream of a first oxidant or an other oxidant and to generate a flame. The plurality of burners is disposed in the interior of the furnace in a substantially circular pattern spaced around the longitudinal axis of the furnace. The second step is to combust the stream of the first fuel or the other fuel with the stream of the first oxidant or an other oxidant. The third step is to generate the plurality of flames. The fourth step is to provide an oxidant port disposed in the interior of the furnace between and surrounded by the plurality of burners. The oxidant port is substantially equidistant from each burner and adapted to transmit at least one jet of the first oxidant or the other oxidant axially between at least two of the plurality of flames. The fifth step is to transmit at least one jet from the oxidant port at a controlled flow rate axially between at least two of the plurality of flames. At least a portion of the first oxidant or the other oxidant in the at least one jet is required to complete combustion of at least a portion of at least one stream of the first fuel or the other fuel.

A fourth embodiment of the method for combusting a fuel in a furnace, the furnace having an interior and longitudinal axis, is similar to the third embodiment but includes three additional steps. The first additional step is to provide a plurality of fuel staging lances. Each fuel staging lance is spaced apart from another fuel staging lance. The plurality of fuel staging lances surrounds at least one of the burners. At least one fuel staging lance is adapted to transmit a flow of at least one of the first fuel and the other fuel at a first flow rate different from the second flow rate at which another flow of at least one of the first fuel and the other fuel is transmitted by at least one other fuel staging lance. The second additional step is to transmit from the at least one fuel staging lance the flow of at least one of the first fuel and the other fuel at the first flow rate. The third additional step is to transmit from the at least one other fuel staging lance the another flow of at least one of the first fuel and the other fuel at the second flow rate.

A fifth embodiment of the method for combusting a fuel in a furnace, the furnace having an inner wall, includes multiple steps. The first step is to provide a plurality of burners adapted to generate a plurality of flames, each burner being spaced apart from another burner and adapted to combust a stream of a first fuel or an other fuel with a stream of a first oxidant or an other oxidant to generate a flame. The second step is to provide a plurality of oxidant ports, each oxidant port being disposed between and surrounded by at least two of the plurality of burners. Each oxidant port is adapted to transmit at least one jet of the first oxidant or the other oxidant axially between at least two of the plurality of flames. The plurality of burners forms a first matrix and the plurality of oxidant ports forms a second matrix adjacent the first matrix. The third step is to transmit the at least one jet from the oxidant port at a controlled flow rate axially between at least two of the plurality of flames. At least a portion of the first oxidant or the other oxidant in the at least one jet is required to complete combustion of at least a portion of at least one stream of the first fuel or the other fuel. In a variation of this embodiment, the first matrix and the second matrix are each formed on or near the inner wall of the furnace.

A sixth embodiment of the method for combusting a fuel in a furnace, the furnace having a top and bottom opposite the top, includes multiple steps. The first step is to provide a plurality of burners adapted to generate a plurality of flames, each burner being spaced apart from another burner and adapted to combust a stream of a first fuel or an other fuel with a stream of a first oxidant or an other oxidant and to generate a flame. The second step is to combust the stream of the first fuel or the other fuel with a stream of the first oxidant or an other oxidant. The third step is to generate the plurality of flames. The fourth step is to provide an oxidant port disposed between and surrounded by two of the plurality of burners. The oxidant port is adapted to transmit at least one jet of the first oxidant or the other oxidant axially between two of the plurality of flames. The oxidant port in the two of the plurality of burners are adjacent the top of the furnace, and the two of the plurality of the flames are transmitted from the two of the plurality of burners toward the bottom of the furnace. The fifth step is to transmit the at least one jet from the oxidant port at a controlled flow rate axially between at least two of the plurality of flames. At least a portion of the first oxidant or the other oxidant in the at least one jet is required to complete combustion of at least a portion of at least one stream of the first fuel or the other fuel.

Another aspect of the invention is a method for reducing nitrogen oxide emissions from a plurality of products of combustion generated during combustion of a fuel in a furnace. An embodiment of this method includes multiple steps. The first step is to provide a plurality of burners, including a first burner and a second burner, adapted to generate a plurality of flames. The first burner is adapted to combust a first stream of the fuel with a first stream of a first oxidant and to generate a first flame. The second burner is spaced apart from the first burner and adapted to combust a second stream of the fuel, or a stream of an other fuel, with a second stream of the first oxidant, or a first stream of a second oxidant, and to generate a second flame. The second step is to combust the first stream of the fuel with the first stream of the first oxidant. The third step is to combust the second stream of the fuel, or the stream of the other fuel, with the second stream of the first oxidant, or the first stream of the second oxidant. The fourth step is to generate the plurality of flames, including the first flame and the second flame. The fifth step is to provide an oxidant port disposed between and surrounded by at least two of the plurality of burners, including the first burner and the second burner. The oxidant port is adapted to transmit at least one jet of the first oxidant, the second oxidant, or an other oxidant, axially between at least two of the plurality of flames, including the first flame and the second flame. The at least one jet has an oxygen concentration in the range of about 5 vol. % to about 50 vol. %. The sixth step is to transmit the at least one jet from the oxidant port at a controlled flow rate axially between at least two of the plurality of flames, including the first flame and the second flame, wherein the controlled flow rate is controlled at least in part by a damper. At least a portion of the first oxidant, or the second oxidant, or the other oxidant in the at least one jet completes combustion of at least a portion of at least one of the first stream of the fuel and the second stream of the fuel, or the stream of the other fuel. The at least one jet provides about 5% to about 50% of a total oxidant required to operate the furnace.

## BRIEF DESCRIPTION OF THE DRAWINGS

The invention will be described by way of example with reference to the accompanying drawings, in which:
Figure 1 is a schematic diagram illustrating a prior art vertical cylindrical process heater with multiple burners;
Figure 2 is a schematic diagram illustrating a plan view of one embodiment of the present invention in a vertical cylindrical process heater;
Figure 3 is a schematic diagram illustrating another embodiment of the present invention in a wall-fired boiler;
Figure 4 is a schematic diagram illustrating an oxidant port used in the present invention surrounded by four burners;
Figure 5 is a schematic diagram illustrating a matrix of oxidant ports and burners for use of the present invention in applications such as wall-fired boilers; and
Figure 6 is a schematic diagram illustrating another embodiment of the present invention in a top-fired reformer wherein the oxidant ports are surrounded by downward firing burners.

## DETAILED DESCRIPTION OF THE INVENTION

The Dynamic Burner Reconfiguration (DBR) of the present invention provides a novel way to overcome flame interaction and resultant high NOx in high firing intensity heaters and boilers. A single oxidant jet (or multiple oxidant jets) from an oxidant port in or near the center of a burner arrangement provides a dynamic arrangement of supplementing combustion air or oxidant to reduce the effect of fuel-rich combustion by merging flames and to provide stability to fuel-rich burner flames.

Depending on burner firing intensity, individual burner stoichiometry, and relative spacing, the oxidant flow rate from the oxidant port is carefully controlled. The oxidant purges the central fuel-rich region, lowers the peak flame temperature, and reduces both thermal and prompt NOx formation rates. In addition, the arrangement allows for extended turndown by dynamically reconfiguring the burner. The benefits include better heat transfer to process tubes and lower NOx emissions.

Applicants discovered that by installing a damper-controlled oxidant port in the bottom of a vertical cylindrical furnace, the formation and extent of the high-temperature central region in the furnace can be minimized. A single oxidant jet in the center (or multiple oxidant jets) can provide enhanced mixing with the merging flames and provides a relatively cooler medium (air, oxygen-enriched air, or other oxidant) to convey heat away from the center region. More heat transfer takes place near the process tubes when the center region acquires relatively cooler temperatures. This lowers the firing intensity of fuel jets injected from the inner burner circle.

Using air as the oxidant, this arrangement resulted in NOx emissions below 22 ppm in a vertical cylindrical heater design of relatively high firing intensity. The central air jet actively purges the fuel-rich region in the center, lowering overall flame gas temperature and reducing both thermal and prompt NOx formation. By varying the amount of air flow, depending on total firing capacity, the individual burner mixing patterns and heat transfer characteristics of the multiple flames can be altered. The net benefits are lower NOx and CO emissions, higher overall heat transfer, higher heater turndown, and improved draft management for natural draft heaters.

The present invention provides for injection of combustion air or oxygen-enriched air (or other oxidants) at one or more strategic locations where multiple flames merge and create unacceptable overall flame characteristics. The DBR is dynamic because it can be fine tuned for the oxidant flow characteristics (flow rate, swirl, velocity, enrichment level) on-the-fly. Therefore, the DBR oxidant can be increased or decreased in flow rates, velocities, enrichment level, or swirl number on demand based on firing capacity of the heater or boiler. It is a burner reconfiguration because the multiple burner flames are now utilizing or sharing the DBR oxidant for completing combustion in the fuel-rich region of the merging flames, purging the merged flame region with relatively cooler oxidant to reduce the peak flame temperatures, and reducing the overall NOx emissions. In addition to a reduction in NOx emissions, other benefits are a reduction in hot spots inside the heater or boiler, improved heat transfer profile, increased fuel efficiency, and extension of tube life due to lowered peak flame temperatures.

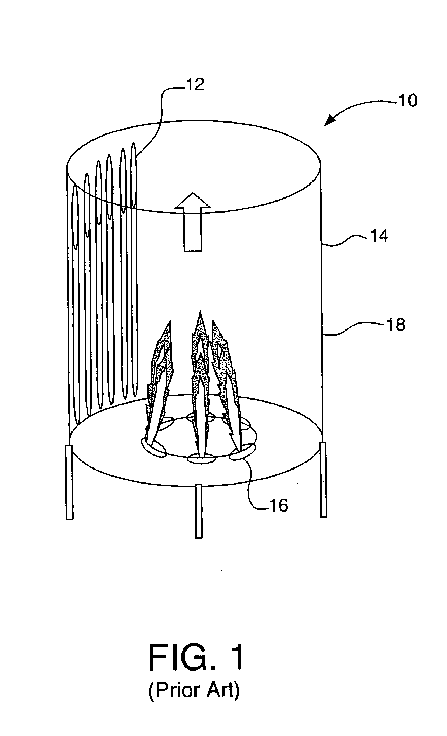

Figure 1 shows a typical prior art vertical cylindrical furnace or process heater 10 having process tubes 12 along the furnace wall 14 and a number of high firing rate burners 16 clustered together. The burners are installed on a burner circle diameter (BCD) and tubes are installed on a tube circle diameter (TCD). Typically, one to 16 burners are located at a TCD/BCD ratio of 2 to 3. Multiple burner flames 18 coalesce in the center due to heater flow dynamics. Lack of heat transfer and converging flames create a very high-temperature, fuel-rich region in the center. Due to a flame re-circulation region in the center, very high thermal and prompt NOx emissions result.

Standard industry practice is to shut off the fuel flow rate in every other burner. This reduces the flame interference and reduces the high-temperature region in the center. However, this makes certain burners fire at more than design capacity, and heat distribution to the furnace wall becomes uneven and causes hot spots. This affects the heater performance and reduces the life of the process tubes.

The present invention introduces an oxidant through an oxidant port or ports located in or near the center region of the furnace or the cluster of burners. This provides a certain percent of combustion air to:

1) react with the burner fuel stream to create a low-temperature flame;
2) reduce the effect of merging flames by providing an effective air purge;
3) reduce the fuel-rich region in the center of the merging flames;
4) convey heat out of the merged flame region to reduce high-temperature build up and reduce NOx emissions (approximately 30% to 75% NOx reduction is possible using strategic location of DBR ports);
5) improve uniformity in heat flux to the load by distributing more heat to the process tubes and less in the center region where it can produce NOx due to poor heat transfer; and
6) provide a retrofittable solution.

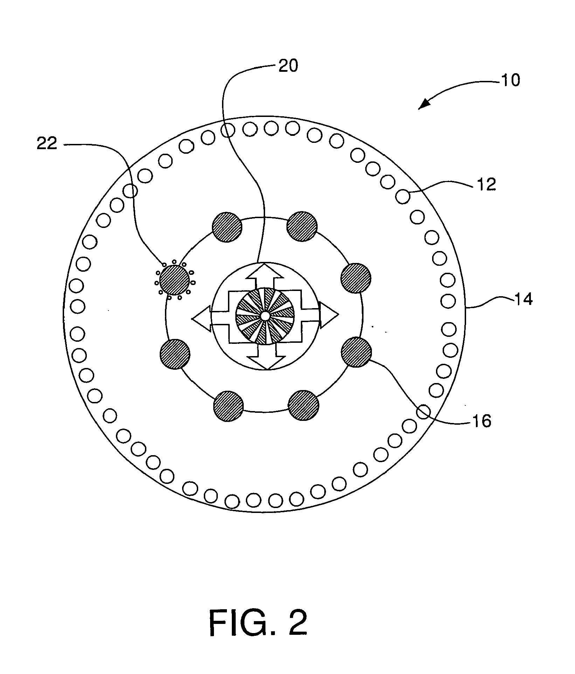

Figure 2 is a schematic diagram showing a plan view of an embodiment of the present invention in a vertical cylindrical heater 10 having process tubes 12 on the inner perimeter of the heater. In this embodiment, a swirl damper-controlled DBR port or oxidant port 20 is installed in the center of the heater having multiple burners 16. As shown, these low-NOx burners have fuel staging lances 22 spaced around the burner combustion air outlet. For maximum benefit, the outer (closer to process tubes) fuel staging lances are fitted with higher fuel distribution lances and the inner (facing the heater center) fuel staging lances are fitted with lower fuel distribution lances.

Due to natural draft in the furnace of the heater, the DBR air is entrained in the center region. (Although the invention is discussed herein with air as the DBR oxidant, persons skilled in the art will recognize that oxygen-enriched air or other oxidants also may be used. It will also be recognized that the invention may be used with other types of furnaces besides natural draft.) The central (swirling) DBR air jet lowers the temperature in the center region and eliminates fuel-rich combustion (entirely due to the convergence of multiple flames). Multiple burners can be configured on-the-fly (by adjusting the inner circle lances and their individual firing intensity) to create a low-temperature flame in the center and provide stability to multiple burner flames by anchoring flames on a swirling DBR oxidant jet.

Vortex damper adjustments may be made to control the air flow, thereby eliminating or purging the hot flame re-circulation region in the center. The overall benefits include reduction in NOx and improved heat transfer to the load. The swirling DBR air stream provides good mixing with the inner fuel streams from various burners. At the same time, the swirling DBR air stream provides internal flue gas recirculation to reduce the availability of oxygen. This provides a low-temperature diluted combustion zone for the inner fuel jets. The net result is a very uniform heat flux to the process tubes and significantly lower NOx emissions.

Applicants demonstrated their invention in a three-burner vertical cylindrical heater fitted with a DBR port or oxidant port centered between the three burners. Each of the low-NOx burners had 10 fuel staging lances on the outer periphery, and a 70:30 fuel distribution was set between the staged fuel lances in the outer region (toward the process tubes) compared to the inner region (facing the DBR port).

This arrangement resulted in NOx emissions below 22 ppmv (at 3% excess 02 dry) in a three-burner vertical cylindrical heater (rated at 33 MM Btu/Hr firing capacity) with a baseline NOx emissions of 100 ppmv (at 3% excess 02 dry). The heater was fired at greater than 600,000 Btu/Hr-Ft2 firing intensity. The central DBR port provided about 30% of the total combustion air.

The central DBR jet can actively purge the fuel-rich region in the center, lowering overall flame gas temperature and reducing both thermal and prompt NOx formation. By varying the amount of air flow depending on total firing capacity, the individual burner mixing patterns and heat transfer characteristics of the multiple flames can be altered. The net benefits are lower NOx and CO emissions, higher overall heat transfer, higher heater turndown, and improved draft management for natural draft heaters.

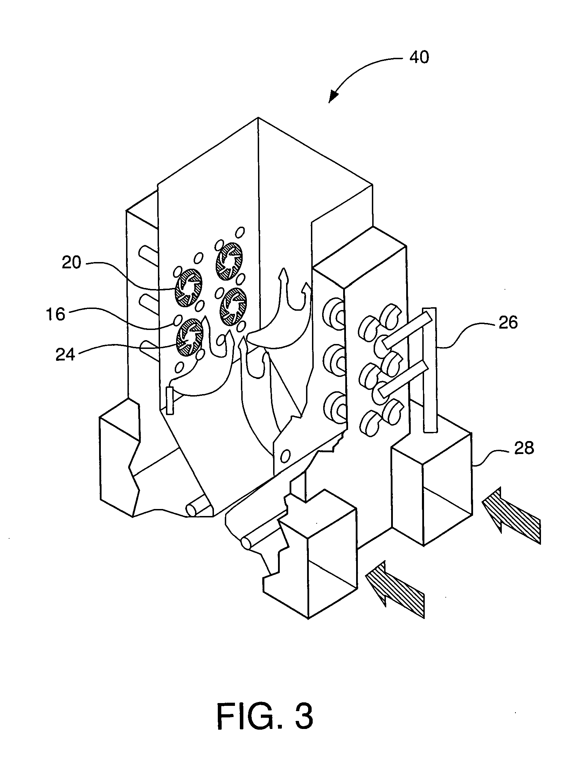

Figure 3 shows another embodiment of the present invention in a wall-fired boiler 40. Here, the DBR ports or oxidant ports 20 are strategically positioned between a matrix of burners 16. The oxidant ports include swirl vanes 24. Each oxidant port is surrounded by four low-NOx burners, thereby forming a matrix of oxidant ports and burners. Air or another oxidant is provided to the oxidant ports through the air supply manifold 26 equipped with a flow control (not shown). A flow of combustion air supply is provided to the furnace of the boiler through the plenums 28. Persons skilled in the art will recognize that the air or other oxidant (e.g., oxygen-enriched air, etc.) may be introduced into the furnace system using natural draft, induced draft, forced draft, or balanced draft using one or more fans (not shown).

In pulverized coal fired boilers, the DBR ports can also inject oxygen-enriched air, which enables the clustered burners to operate at very high equivalence ratios ($\phi = 2$). This results in fuel-rich combustion, thereby lowering the flame temperature and reducing the NOx emissions. In addition, the DBR air enrichment allows the unstable fuel-rich burner flames to stabilize around the central DBR jet.

The air source for the DBR jets can be the same plenum air supplied to the burners. However, solenoid operated valves can be used to meter the DBR air depending on the location of the DBR port. The DBR air distribution can be profiled depending on the height of the DBR port. The air or oxygen-enriched air concentration and distribution are calibrated based on the operating stoichiometry of the wall-fired burners and their relative location on the firing wall.

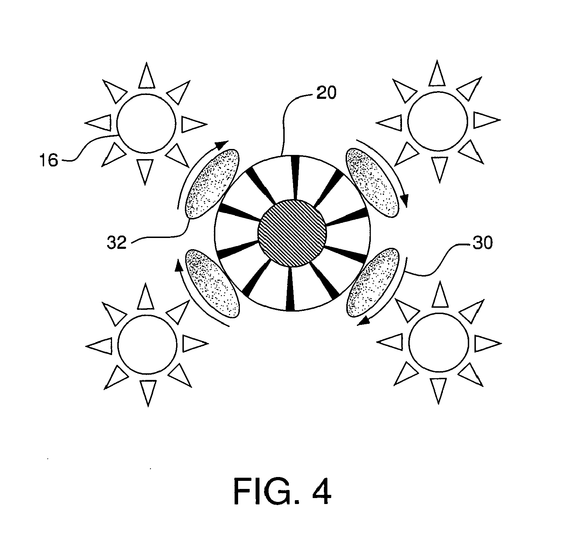

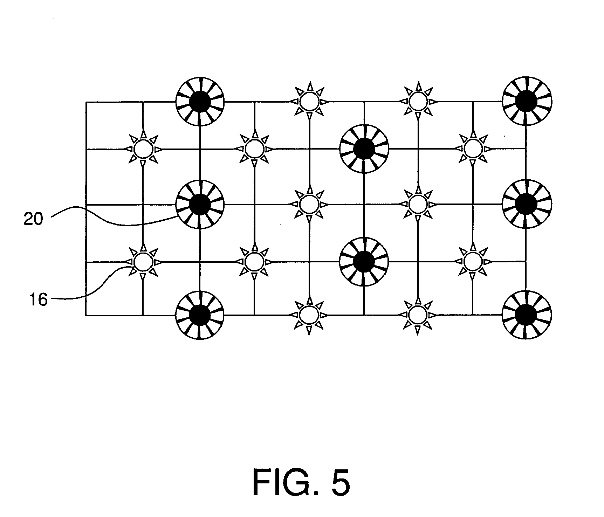

Figures 4 and 5 illustrate the low-NOx process resulting from the DBR burner installation with respect to burner location. In Figure 4, the oxidant port 20 is surrounded by four burners 16. In the embodiment shown, the DBR port generates a swirling air stream, as illustrated by the arrows 30 indicating a clockwise rotation. Low-temperature combustion zones 32 between the burners and the DBR port reduce NOx formation.

Figure 4 shows that the low-temperature region formed by the DBR jet reduces the negative effects of merging flames. The merging is minimized by effective purging due to the DBR jet. The DBR jet can be a straight jet, enriched jet, swirling air jet, swirling oxygen-enriched jet, or, as persons skilled in the art will recognize, various other types of jets. The oxygen concentration in the jet may be greater than about 5% and as high as about 50%. The swirl number for the swirling jet may be in the range of about 0.2 to 0.6.

Table 1 provides some examples of the DBR design parameters. These are not meant to be limiting, but are provided to show typical ranges for the parameters for some of the embodiments of the invention.

**Table I: DBR Design Parameters**

| | No. of Burners | Fuel | Typical Burner Firing Rate (MMBtu/Hr) | Ratio (n1) No of Burners / No. of DBR ports | Ratio (n2) Db/Dp | Burner Equi. Ratio ($\phi$) | DBR port air (%) of Overall air flow for bu. cluster | DBR port axial air velocity (FPS) | DBR port Swirl No. (optional) |
|---|---|---|---|---|---|---|---|---|---|
| **Process Heaters** | 1 to 16 | Gas | 10 | 1<n1<8 | 0.2<n2<1 | 1<$\phi$<2 | 5 to 50 | 20 to 1000 | 0.2 to 0.6 |
| **Wall Fired Boilers** | 4 to 100 | Coal/ Oil/Gas | 20 | 1<n1<4 | 0.2<n2<1 | 1<$\phi$<2 | 5 to 50 | 20 to 1000 | 0.2 to 0.6 |

In Figure 5, as in Figure 4, each oxidant port 20 (other than those on the perimeter of the matrix) is "surrounded by" a plurality of burners 16. As used herein, when an oxidant port is "surrounded by" three or more burners, the oxidant port is positioned within the perimeter of a geometric shape formed by a series of imaginary lines connecting adjacent burners. For example, the imaginary line in Figure 1 connecting the adjacent burners forms a circle, as is also the case in Figure 2. In Figures 3 and 5, the geometric shape is a rectangle (e.g., square or other rectangle). There are, of course, many other possible shapes including, but not limited to, ellipses, regular polygons, irregular polygons, etc. Also, although it is preferred that the oxidant port be centered between the surrounding burners, that is not necessary, as one or more oxidant ports may be located at positions other than the center.

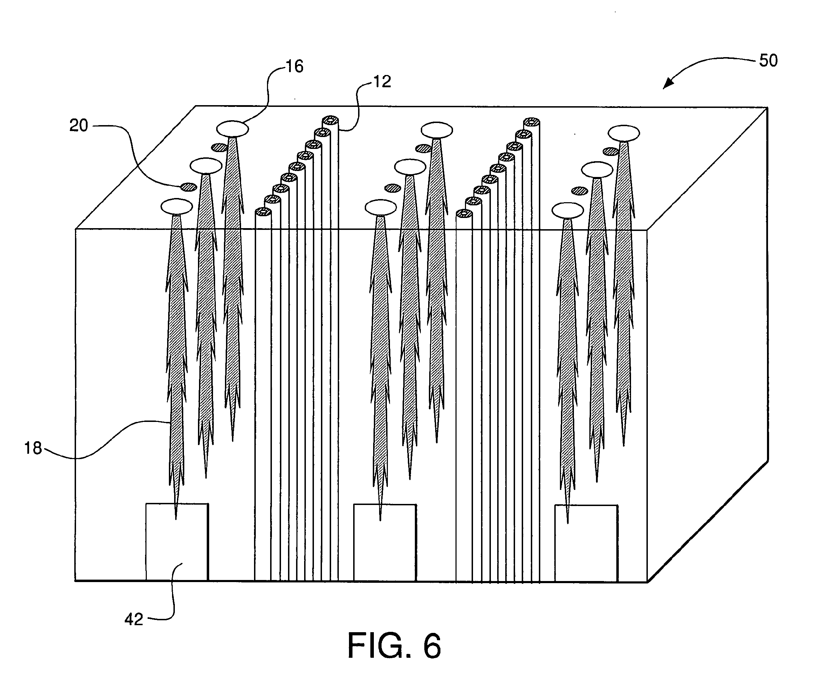

The case of only two burners forms a special case with regard to the term "surrounded by." In this case, "surrounded by" means that at least a portion of the oxidant port must be located so that it is intercepted by a straight line connecting the two burners. For example, in Figure 6, since each oxidant port is intercepted by a straight line between adjacent burners, each oxidant port is "surrounded by" at least two of the plurality of burners shown in Figure 6.

Figure 6 illustrates an embodiment of the invention in a top-fired reformer 50. The combustion chamber encloses several rows of process tubes 12. The burners 16 positioned on either side of the process tubes generate flames 18 in the combustion chamber and the combustion products exit through the gas outlets 42. Each of the oxidant ports 20 of the present invention are "surrounded by" two burners, as shown in Figure 6.

Throughout this disclosure and the claims which follow, reference is made to a fuel or fuels, streams of fuel(s), an oxidant or oxidants, and streams of oxidant(s). Persons skilled in the art will understand the meaning and scope of these terms, especially in view of the usage of the terms within the context of the claims and the disclosure, including the drawings. However, to further assist such persons and other persons, the following paragraphs, which elaborate on these terms, are provided.

Fuel is the source of energy from combustion. The fuel significant to industries is generally hydrocarbon based. It can be a pure component, or a mixture of many components, some of which may be inert. In the context of this disclosure, a fuel stream as supplied to a burner may be one single type of fuel, or may be several types of fuel, either blended at the burner connection, or at the point of combustion, or may remain separate until discharge through various fuel orifices. The most common gaseous fuel is natural gas, but for refinery and power applications, mixtures of natural gas, propane, methane, ethane, ethylene, propylene, carbon monoxide, hydrogen, etc. and inerts such as water, nitrogen, and carbon dioxide have been used. In the case of liquid fuels, commonly used fuels are #2 (diesel), #4, #6 (bunker-C), and recycled or waste fuel oils. In the case of solid fuels, coal, coke, pet coke, and pulverized coal are widely used for utility boilers and power applications. The fuels listed herein are provided by way of example only and do not limit the scope of the present invention, as persons skilled in the art will recognize that the invention may be used with other fuels, as well as with many combinations and mixtures of various fuels and fuel streams.

Oxidant is the source of oxygen necessary to react with the fuel and release the energy in the fuel. An oxidant may be air, pure oxygen, oxygen-enriched air, depleted air having oxygen less than the atmospheric oxygen level, such as from gas turbine exhaust, or a mixture of any of these types with furnace gas, such as is used in gas recirculation applications. In the context of this disclosure, an oxidant stream as supplied to a burner may be one single source oxidant, or multiple sources, either mixed prior to or inside the burner, or may remain separate. The oxidants listed herein are provided by way of example only and do not limit the scope of the present invention, as persons skilled in the art will recognize that the invention may be used with other oxidants, as well as with many combinations and mixtures of various oxidants and oxidant streams.

Although illustrated and described herein with reference to certain specific embodiments, the present invention is nevertheless not intended to be limited to the details shown. Rather, various modifications may be made in the details within the scope and range of equivalents of the claims and without departing from the spirit of the invention.

**Claims**

1.   A furnace combustion system (10), comprising:

   a plurality of burners (16) adapted to generate a plurality of flames, including

      a first burner (16) adapted to combust a first stream of a fuel with a first stream of a first oxidant and to generate a first flame, and
      a second burner (16) spaced apart from the first burner and adapted to combust a second stream of the fuel, or a stream of an other fuel, with a second stream of the first oxidant, or a first stream of a second oxidant, and to generate a second flame; and
      an oxidant port (20) disposed between and surrounded by at least two of the plurality of burners (16), including the first burner and the second burner, the oxidant port (20) adapted to transmit at least one jet of the first oxidant, the second oxidant, or an other oxidant, axially between at least two of the plurality of flames, including the first flame and the second flame,

wherein the at least one jet is transmitted from the oxidant port (20) at a controlled flow rate, and

wherein at least a portion of the first oxidant, or the second oxidant, or the other oxidant in the at least one jet is required to complete combustion of at least a portion of at least one of the first stream of the fuel and the second stream of the fuel, or the stream of the other fuel.

2. A furnace combustion system as in claim 1, wherein the controlled flow rate is controlled at least in part by a damper.

3. A furnace combustion system as in claim 1 or 2, wherein the oxidant port (20) is substantially equidistant from the first burner and the second burner (16).

4. A furnace combustion system as in one of claims 1 to 3, wherein the at least one jet includes a swirling stream, especially wherein the swirling stream has a swirl number in the range of about 0.2 to about 0.6.

5. A furnace combustion system as in one of claims 1 to 4, wherein the at least one jet has an oxygen concentration in the range of about 5 vol. % to about 50 vol. %, and/or wherein the at least one jet provides about 5% to about 50% of a total oxidant required to operate a furnace operated with the furnace combustion system, and/or wherein the at least one jet has a velocity in a range of about 20 ft/sec. to about 1,000 ft/sec.

6. A furnace combustion system as in one of claims 1 to 5, wherein at least one of the first flame and the second flame is fuel-rich, and/or wherein the first flame merges with the second flame, and/or wherein at least one of the first burner (16) and the second burner (16) is adapted to transmit a variable distribution of at least one of the fuel and the other fuel.

7. A furnace combustion system as in one of claims 1 to 6 wherein each burner (16) is spaced apart from another burner (16) and adapted to combust a stream of a first fuel or an other fuel with a stream of a first oxidant or an other oxidant and to generate a flame.

8. A furnace combustion system in a furnace having an interior and a longitudinal axis as in one of claims 1 to 7, wherein the plurality of burners is disposed in the interior of the furnace (10) in a substantially circular pattern spaced around the longitudinal axis of the furnace (10); and

the oxidant port (20) is disposed in the interior of the furnace (10) between and surrounded by the plurality of burners (16).

9. A furnace combustion system as in claim 8, further comprising a plurality of fuel staging lances (22), each fuel staging lance (22) spaced apart from another fuel staging lance (22), the plurality of fuel staging lances (22) surrounding at least one of the burners (16), wherein at least one fuel staging lance (22) is adapted to transmit a flow of at least one of the first fuel and the other fuel at a first flow rate different than a second flow rate at which another flow of at least one of the first fuel and the other fuel is transmitted by at least one other fuel staging lance (22).

10. A furnace combustion system in a furnace having an inner wall as in one of claims 1 to 9 comprising a plurality of oxidant ports (20) the plurality of the burners (16) forming a first matrix and the plurality of the oxidant ports (20) forming a second matrix adjacent the first matrix.

11. A furnace combustion system, as in claim 10, wherein the first matrix and the second matrix are each formed on or near the inner wall of the furnace.

12. A furnace combustion system in a furnace having a top and a bottom opposite the top as in one of claims 1 to 7, wherein the oxidant port (20) and the two of the plurality of the burners (16) are adjacent the top of the furnace, and the two of the plurality of the flames are transmitted from the two of the plurality of the burners (16) toward the bottom of the furnace.

13. A method for combusting a fuel in a furnace, comprising the steps of:

providing a plurality of burners (16) adapted to generate a plurality of flames, including
a first burner (16) adapted to combust a first stream of the fuel with a first stream of a first oxidant and to generate a first flame, and

a second burner (16) spaced apart from the first burner (16) and adapted to combust a second stream of the fuel, or a stream of an other fuel, with a second stream of the first oxidant, or a first stream of a second oxidant, and to generate a second flame;
combusting the first stream of the fuel with the first stream of the first oxidant;
combusting the second stream of the fuel, or the stream of the other fuel, with the second stream of the first oxidant, or the first stream of the second oxidant;
generating the plurality of flames, including the first flame and the second flame;
providing an oxidant port (20) disposed between and surrounded by at least two of the plurality of burners (16), including the first burner (16) and the second burner (16), the oxidant port (20) adapted to transmit at least one jet of the first oxidant, the second oxidant, or an other oxidant, axially between at least two of the plurality of flames, including the first flame and the second flame; and
transmitting the at least one jet from the oxidant port (20) at a controlled flow rate axially between at least two of the plurality of flames, including the first flame and the second flame,
whereby at least a portion of the first oxidant, or the second oxidant, or the other oxidant in the at least one jet completes combustion of at least a portion of at least one of the first stream of the fuel and the second stream of the fuel, or the stream of the other fuel.

14. A method as in claim 13, wherein the controlled flow rate is controlled at least in part by a damper and/or wherein the oxidant port is substantially equidistant from the first burner and the second burner.

15. A method as in one of claims 13 or 14, wherein the at least one jet includes a swirling stream especially wherein the swirling stream has a swirl number in the range of about 0.2 to about 0.6.

16. A method as in one of claims 13 to 15, wherein the at least one jet has an oxygen concentration in the range of about 5 vol. % to about 50 vol. % and/or wherein the at least one jet provides about 5% to about 50% of a total oxidant required to operate the furnace and/or wherein the at least one jet has a velocity in a range of about 20 ft/sec. to about 1,000 ft/sec and/or wherein at least one of the first flame and the second flame is fuel-rich.

17. A method as in one of claims 13 to 16, wherein the first flame merges with the second flame and/or wherein at least one of the first burner (16) and the second burner (16) is adapted to transmit a variable distribution of at least one of the fuel and the other fuel.

18. A method for combusting a fuel in a furnace as in one of claims 13 to 17, wherein each burner (16) is spaced apart from another burner and adapted to combust a stream of said first fuel or an other fuel with a stream of a first oxidant or an other oxidant and to generate a flame;
whereby at least a portion of the first oxidant or the other oxidant in the at least one jet completes combustion of at least a portion of at least one stream of the first fuel or the other fuel.

19. A method for combusting a fuel in a furnace having an interior and a longitudinal axis as in one of claims 13 to 18, wherein the plurality of burners (16) is disposed in the interior of the furnace in a substantially circular pattern spaced around the longitudinal axis of the furnace; and
wherein the oxidant port (20) is substantially equidistant from each burner (16).

20. A method as in claim 19, comprising the further steps of:

providing a plurality of fuel staging lances (22), each fuel staging lance (22) spaced apart from another fuel staging lance (22), the plurality of fuel staging lances (22) surrounding at least one of the burners (16), wherein at least one fuel staging lance (22) is adapted to transmit a flow of at least one of the first fuel and the other fuel at a first flow rate different than a second flow rate at which another flow of at least one of the first fuel and the other fuel is transmitted by at least one other fuel staging lance (22);
transmitting from the at least one fuel staging lance (22) the flow of at least one of the first fuel and the other fuel at the first flow rate; and
transmitting from the at least one other fuel staging lance (22) the another flow of at least one of the first fuel and the other fuel at the second flow rate.

21. A method for combusting a fuel in a furnace having an inner wall as in one of claims 13 to 20, wherein a plurality of oxidant ports (20) is provided, each oxidant port (20) disposed between and surrounded by at least two of the plurality of burners, each oxidant port adapted to transmit at least one jet of the first oxidant or the other oxidant axially between at least two of the plurality of flames, the plurality of the burners (16) forming a first matrix and the plurality of the oxidant ports (20) forming a second matrix adjacent the first matrix.

22. A method as in claim 21, wherein the first matrix and the second matrix are each formed on or near the inner wall of the furnace.

23. A method for combusting a fuel in a furnace having a top and a bottom opposite the top as in one of claims 1 to 20, wherein the oxidant port (20) and the two of the plurality of the burners (16) are adjacent the top of the furnace, and the two of the plurality of the flames are transmitted from the two of the plurality of the burners toward the bottom of the furnace.

24. Use of a furnace combustion system (10) as in one of claims 1 to 12 for reducing nitrogen oxide emissions from a plurality of products of combustion generated during combustion of fuel in said furnace wherein the at least one jet has an oxygen concentration in the range of about 5 vol. % to about 50 vol. %; and
    wherein the at least one jet provides about 5% to about 50% of a total oxidant required to operate the furnace.

FIG. 1
(Prior Art)

FIG. 2

40

20

16

24

26

28

FIG. 3

FIG. 4

FIG. 5

FIG. 6

EP 1 729 062 A2